# EUROPEAN PATENT APPLICATION

(11) **EP 4 682 384 A1**
(43) Date of publication of application: **21.01.2026**
(21) Application number: 24853906.6
(22) Date of filing: 29.08.2024
(51) Int. Cl.: F04C 29/02, F04C 29/06, F04C 23/02, B60H 1/00

(54) **ELECTRIC COMPRESSOR, AIR CONDITIONING SYSTEM AND VEHICLE**

(71) Applicant: Anhui Welling Auto Parts Corporation Limited, Hefei, Anhui 230088 (CN); Anqing Welling Auto Parts Co., Ltd., Anqing, Anhui 246008 (CN); Guangdong Welling Auto Parts Corporation Limited, Foshan, Guangdong 528311 (CN)
(72) Inventor: LI, Fayun, Hefei, Anhui 230088 (CN); YANG, Guoyong, Hefei, Anhui 230088 (CN)
(74) Representative: Ran, Handong
(86) International application number: PCT/CN2024/115598
(87) International publication number: WO 2025/036502

(57) **Abstract**

An electric compressor (100), an air conditioning system (200), and a vehicle (300). The electric compressor (100) comprises: a housing assembly (1), wherein the housing assembly (1) comprises a first housing (11) and a support (13), a first receiving cavity (14) is defined between the first housing (11) and the support (13), and the bottom of the first receiving cavity (14) forms a liquid storage cavity (141); and a compression mechanism (2), wherein a pumping port (201) is provided on the compression mechanism (2). A gas suction and liquid return structure (5) is provided on the support (13), the gas suction and liquid return structure (5) comprises a gas suction channel (51) and an oil return hole (52), one end of the gas suction channel (51) is communicated with the first receiving cavity (14) and is located above the liquid storage cavity (141), the other end of the gas suction channel (51) is communicated with the pumping port (201), and the oil return hole (52) has an oil return inlet end (521) communicated with the liquid storage cavity (141), and an oil return outlet end (522) communicated with the gas suction channel (51).

## Description

### CROSS-REFERENCE TO RELATED APPLICATION

This application is submitted based on and claims priority to Chinese patent application No. 202311041752.8, filed on August 16, 2023, the entire contents of which are incorporated herein by reference.

### FIELD

The present application relates to the field of compressor technologies, and more particularly, to an electric compressor, an air conditioning system, and a vehicle.

### BACKGROUND

An electric compressor, as a core component of a vehicle refrigeration device, is a positive displacement compressor with high efficiency, low noise, and stable operation. As a third-generation vehicle compressor, the electric compressor is widely used in vehicle air conditioning systems. In recent years, with the development of new energy vehicles, requirements for noise, vibration, and durability of vehicle air-conditioning compressors have been further improved. The electric compressor, such as a scroll compressor and a rolling rotor compressor, needs to be supplied with lubricating oil during use to lubricate friction pairs in the electric compressor to reduce the noise generated by the friction pairs during operation.

In the electric compressor, a gas suction hole of a compression mechanism is typically located at a bottom of the mechanism. Liquid refrigerant and refrigeration oil returning from a system may directly enter the compression mechanism, which is prone to liquid strike, causing a sudden surge in compressor load and wear on internal components. Moreover, excessive liquid refrigerant entering into the compression mechanism may also cause lubrication failure, leading to mechanical abrasion.

### SUMMARY

The present application aims to solve at least one of the technical problems in the related art. To this end, the present application provides an electric compressor to improve a liquid strike problem of the electric compressor.

The present application also provides an air conditioning system having the above-mentioned electric compressor.

The present application further provides a vehicle having the above-mentioned air conditioning system.

According to a first aspect of the present application, the electric compressor includes a housing assembly and a compression mechanism. The housing assembly includes a first housing and a support. A first receiving cavity is defined between the first housing and the support. The first housing has a refrigerant inlet in communication with the first receiving cavity. A bottom of the first receiving cavity forms a liquid storage cavity. The compression mechanism is connected to the support and has a pump suction port. The support is provided with a gas suction-liquid return structure including a gas suction passage and an oil return hole. One end of the gas suction passage is a gas suction inlet end in communication with the first receiving cavity and located above the liquid storage cavity in a gravity direction, and the other end of the gas suction passage is in communication with the pump suction port. Two ends of the oil return hole are an oil return inlet end in communication with the liquid storage cavity and an oil return outlet end in communication with the gas suction passage.

According to the electric compressor of the present application, the support is provided to facilitate assembly on the one hand, and on the other hand, to improve overall structural rigidity of the housing assembly and enhance performance of anti-vibration, anti-bending, and anti-torsion of the housing assembly. This configuration of the gas suction passage, in coordination with a gas-liquid separation function of the first receiving cavity, prevents liquid refrigerant from directly entering the compression mechanism as much as possible, reduces the likelihood of liquid strike, lowers an operating load of the electric compressor, and avoids internal wear caused by the liquid strike as much as possible. This configuration of the oil return hole ensures smooth return of lubricating oil, prevents accumulation of lubricating oil, lubricates internal components of the compression mechanism, and further reduces wear. As a result, operating noise and vibration of the electric compressor are reduced.

In some embodiments, at least two oil return holes are provided and include a first oil return hole and a second oil return hole. An oil return inlet end of the first oil return hole is located below an oil return inlet end of the second oil return hole in the gravity direction.

In some embodiments, in a direction of airflow in the gas suction passage, an oil return outlet end of the first oil return hole is located downstream of an oil return outlet end of the second oil return hole.

In some embodiments, the gas suction passage includes a first segment and a second segment. The first segment extends in an axial direction of the compression mechanism. One end of the first segment is in communication with the pump suction port. The second segment is vertically arranged and has a lower end in communication with the other end of the first segment and an upper end forming the gas suction inlet end.

In some embodiments, the oil return hole is located at a side of the second segment away from the first segment and is in communication with the second segment.

In some embodiments, the oil return hole extends in the axial direction of the compression mechanism and is adjacent to the lower end of the second segment.

In some embodiments, the gas suction-liquid return structure is integrally formed at the support. Or the gas suction-liquid return structure further includes a support suction pipe. The gas suction passage is formed at the support suction pipe. The support has a mounting hole. An end of the support suction pipe is assembled in the mounting hole.

In some specific embodiments, the gas suction-liquid return structure includes a support suction pipe. The oil return hole is formed at a pipe wall of the support suction pipe and located at a pipe segment of the support suction pipe that is outside the support.

In some embodiments, a diameter of the oil return hole ranges from 0.5 mm to 2 mm. A height difference between the oil return inlet end and a bottom wall of the liquid storage cavity ranges from 2 mm to 10 mm.

Further, a ratio of a diameter of the gas suction passage to the diameter of the oil return hole ranges from 3 to 10.

In some specific embodiments, the compression mechanism is a rotary compression mechanism or a scroll compression mechanism.

According to a second aspect of the present application, the air conditioning system includes the electric compressor according to any one of the embodiments of the first aspect of the present application.

According to the air conditioning system of the present application, by providing the electric compressor of the first aspect, the liquid strike of the electric compressor can be reduced, reducing the operating noise and the vibration, and reducing overall working noise and vibration of the air conditioning system.

According to a third aspect of the present application, the vehicle includes a vehicle body and the air conditioning system according to the second aspect of the present application. The air conditioning system is mounted at the vehicle body.

According to the vehicle of the present application, by providing the air conditioning system of the second aspect, the noise and the vibration can be reduced by reducing the liquid strike, reducing a resonance problem of each component in a vehicle thermal management system caused by the noise and the vibration, and improving the noise and the vibration caused to the vehicle.

Additional aspects and advantages of the present application will be provided in the following description, or will become apparent at least in part from the following description, or may be learned from practicing of the present application.

### BRIEF DESCRIPTION OF THE DRAWINGS

FIG. 1 is a schematic structural view partially illustrating an internal structure of an electric compressor according to some embodiments of the present application.
FIG. 2 is a cross-sectional view of a support and a compression mechanism according to some embodiments of the present application.
FIG. 3 is a cross-sectional view of a support and a compression mechanism according to other embodiments of the present application.
FIG. 4 is a side view of the support in the embodiments illustrated in FIG. 2.
FIG. 5 is a cross-sectional view of the support in the embodiments illustrated in FIG. 2.
FIG. 6 is a schematic view of a vehicle according to an embodiment of the present application.

Reference numerals of the accompanying drawings:
electric compressor 100;
housing assembly 1; inner cavity 10, refrigerant inlet 101; first housing 11; second housing 12; support 13, mounting hole 131; first receiving cavity 14, liquid storage cavity 141; second receiving cavity 15;
compression mechanism 2; pump suction port 201;
drive shaft 4;
gas suction-liquid return structure 5; gas suction passage 51, gas suction inlet end 511, first segment 513, second segment 514; oil return hole 52, oil return inlet end 521, oil return outlet end 522, first oil return hole 52A, second oil return hole 52B; support suction pipe 53;
air conditioning system 200; vehicle 300.

### DETAILED DESCRIPTION OF THE EMBODIMENTS

Embodiments of the present application will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present application.

In the description of the present application, it should be understood that the orientation or the position indicated by terms such as "center", "over", "vertical", "transverse", "horizontal", "inner", "outer", and "axial" should be construed to refer to the orientation or the position as shown in the drawings, and is only for the convenience of describing the present application and simplifying the description, rather than indicating or implying that the pointed device or element must have a specific orientation, or be constructed and operated in a specific orientation, and therefore cannot be understood as a limitation of the present application.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present application, "plurality" means at least two, unless otherwise specifically defined.

An electric compressor 100, an air conditioning system 200, and a vehicle 300 according to the embodiments of the present application are described below with reference to the accompanying drawings.

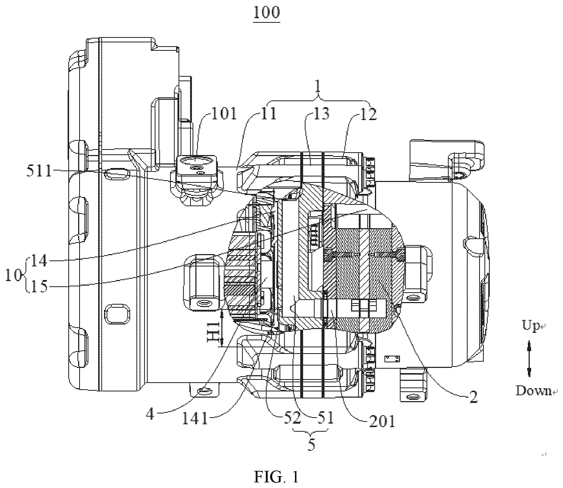

As illustrated in FIG. 1 to FIG. 3, the electric compressor 100 according to an embodiment of the present application includes a housing assembly 1 and a compression mechanism 2. The compression mechanism 2 is configured to compress low-pressure refrigerant into high-pressure refrigerant.

The housing assembly 1 includes a first housing 11 and a support 13. A first receiving cavity 14 is defined between the first housing 11 and a support 13. In some embodiments, the housing assembly 1 further includes a second housing 12. A second receiving cavity 15 is defined between the second housing 12 and the support 13. In other embodiments, an inner cavity 10 is formed between the first housing 11 and the second housing 12. The inner cavity 10 includes the first receiving cavity 14 and the second receiving cavity 15.

In some embodiments, as illustrated in FIG. 1, the first housing 11 has a refrigerant inlet 101 in communication with the first receiving cavity 14. A bottom of the first receiving cavity 14 forms a liquid storage cavity 141. The compression mechanism 2 is disposed between the support 13 and the second housing 12, that is, the compression mechanism 2 is disposed in the second receiving cavity 15. The compression mechanism 2 has a pump suction port 201.

A structure form of the housing assembly 1 is not limited in the present application. In some examples, as illustrated in FIG. 1, the first housing 11, the second housing 12, and the support 13 are all independently processed members. The first housing 11 and the second housing 12 are connected to two opposite sides of the support 13. In other examples, the support 13 is an independently processed member and is integrally placed in the inner cavity 10. The support 13 is connected to the first housing 11 or the second housing 12. In some other examples, the support 13 is integrally formed at the first housing 11, and in this case, the first receiving cavity 14 may be also defined between the first housing 11 and the support 13.

The support 13 is provided to facilitate assembly on the one hand, and on the other hand, to improve overall structural rigidity of the housing assembly 1 and enhance performance of anti-vibration, anti-bending, and anti-torsion of the housing assembly 1. In addition, in some solutions, the support 13 is provided to separate the first receiving cavity 14 from the second receiving cavity 15, which facilitates the first receiving cavity 14 and the second receiving cavity 15 to perform their respective functions. For example, the first receiving cavity 14 serves as a gas-liquid separation cavity and is connected to the refrigerant inlet 101, resulting in a relatively low pressure. The second receiving cavity 15 is in communication with a refrigerant outlet and serves as a buffer cavity for discharging high-pressure gaseous refrigerant. The second receiving cavity 15 has a pressure higher than that of the first receiving cavity 14. Therefore, the support 13 is required to separate the first receiving cavity 14 from the second receiving cavity 15. In other solutions of the present application, the first receiving cavity 14 and the second receiving cavity 15 may also be in communication with each other, in such a manner that an entire inner cavity 10 may be used as a gas-liquid separation cavity.

It should be understood that during operation of the system, the refrigerant, carrying lubricating oil, enters the first receiving cavity 14 from the refrigerant inlet 101. The first receiving cavity 14 may also function as a liquid receiver, where the gas-liquid separation is realized. Liquid refrigerant may settle in the liquid storage cavity 141, while the gaseous refrigerant, after separation, rises and floats above the liquid storage cavity 141. When the compression mechanism 2 is in operation, the gaseous refrigerant in the first receiving cavity 14 is sucked in through the pump suction port 201, compressed by doing work, and then discharged. A pump outlet of the compression mechanism 2 may be directly connected to a refrigerant outlet of the housing assembly 1 or connected to a refrigerant outlet of the housing assembly 1 through a conduit, in such a manner that the high-pressure gaseous refrigerant discharged by the compression mechanism 2 is directly guided to the refrigerant outlet or through the conduit, and then discharged from the refrigerant outlet. Alternatively, in a case where the first receiving cavity 14 is not in communication with the second receiving cavity 15, and the refrigerant outlet of the housing assembly 1 is in communication with the second receiving cavity 15, the high-pressure gaseous refrigerant discharged from the compression mechanism 2 may be discharged into the second receiving cavity 15 and then discharged from the refrigerant outlet.

By forming the liquid storage cavity 141 in the first receiving cavity 14, when serving as a liquid receiver, the electric compressor 100 eliminates a need for providing an additional liquid receiver outside the housing assembly 1.

As illustrated in FIG. 1 to FIG. 3, the support 13 is provided with a gas suction-liquid return structure 5. The gas suction-liquid return structure 5 includes a gas suction passage 51. One end of the gas suction passage 51 is a gas suction inlet end 511, and the other end of the gas suction passage 51 is in communication with the pump suction port 201. The gas suction inlet end 511 is in communication with the first receiving cavity 14 and located above the liquid storage cavity 141 in a gravity direction.

In some embodiments of the present application, the electric compressor 100 may be a horizontal compressor, that is, a drive shaft 4 of the compression mechanism 2 is arranged in a horizontal direction. The electric compressor 100 may also be arranged in an inclined manner, that is, the drive shaft 4 of the compression mechanism 2 is inclined relative to a horizontal plane. Even the electric compressor 100 may further be a vertical compressor, that is, the drive shaft 4 of the compression mechanism 2 is arranged vertically. In each solution, the gas suction inlet end 511 of the gas suction passage 51 is located above the liquid storage cavity 141 in the gravity direction.

This configuration of the gas suction passage 51, in coordination with a gas-liquid separation function of the first receiving cavity 14, prevents the liquid refrigerant from directly entering the compression mechanism 2, reduces the likelihood of liquid strike, lowers an operating load of the electric compressor 100, and avoids internal wear caused by the liquid strike.

The gas suction-liquid return structure 5 further includes an oil return hole 52. Two ends of the oil return hole 52 are an oil return inlet end 521 in communication with the liquid storage cavity 141 and an oil return outlet end 522 in communication with the gas suction passage 51. Therefore, the lubricating oil may flow into the compression mechanism 2 through the oil return hole 52, lubricating internal components of the compression mechanism 2 and further reducing the wear.

It should be understood that, in the liquid storage cavity 141, due to different densities of the liquid refrigerant and the lubricating oil, distribution heights of the liquid refrigerant and the lubricating oil in the liquid storage cavity 141 are usually different. By providing the oil return hole 52, the oil return inlet end 521 may be arranged in advance at a layer where the lubricating oil is located, to reduce the entry of the liquid refrigerant into the oil return hole 52 as much as possible. Therefore, a risk of liquid strike can be reduced. By configuring the oil return outlet end 522 of the oil return hole 52 to be in communication with the gas suction passage 51, the compression mechanism 2 creates a negative pressure in the gas suction passage 51, the negative pressure may be utilized during suction to enable the lubricating oil to be drawn into the compression mechanism 2. In this way, smooth return of the lubricating oil is ensured, and accumulation of lubricating oil is prevented.

By reducing a liquid strike problem of the electric compressor 100, vibration and noise generated during operation can be reduced.

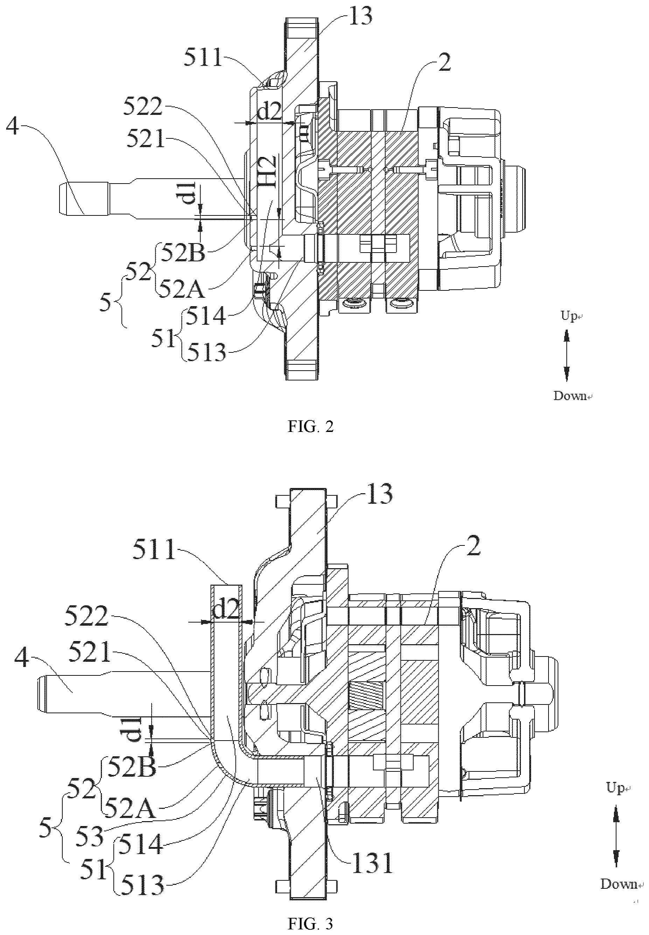

In some embodiments, as illustrated in FIG. 2 and FIG. 3, at least two oil return holes 52 are provided and include a first oil return hole 52A and a second oil return hole 52B. An oil return inlet end 521 of the first oil return hole 52A is located below an oil return inlet end 521 of the second oil return hole 52B in the gravity direction.

It should be understood that, a total amount of the lubricating oil in the system is substantially constant. When lubricating oil level in the liquid storage cavity 141 is low, most of the lubricating oil may flow to the compression mechanism 2 and other locations. As a result, a lubricating oil level in the liquid storage cavity 141 is low. The oil return inlet end 521 of the first oil return hole 52A is arranged relatively low, which can ensure a basic oil return capacity of the gas suction-liquid return structure 5, and can still return oil to the compression mechanism 2 even if there is a smaller amount of lubricating oil in the liquid storage cavity 141. When the lubricating oil level in the liquid storage cavity 141 is relatively high, the lubricating oil flowing into the compression mechanism 2 and other positions may be insufficient. At this time, the lubricating oil level in the liquid storage cavity 141 is relatively high, in such a manner that the first oil return hole 52A and the second oil return hole 52B can both return oil, increasing an oil return amount. Therefore, by setting the oil return inlet ends 521 of at least two oil return holes 52 at different heights in the gravity direction, the different heights of the oil return inlet ends 521 can adapt to lubricating oil requirements of the compression mechanism 2, achieving self-regulation of the oil return amount.

In addition, the deeper the oil return inlet end 521 is positioned relative to a liquid level in the liquid storage cavity 141, the greater the pressure and the stronger the oil return capacity. Therefore, by positioning the oil return inlet end 521 of the first oil return hole 52A below the oil return inlet end 521 of the second oil return hole 52B in the gravity direction, the first oil return hole 52A, which serves as a primary oil return guarantee, can have a stronger oil return capacity. In this way, continuous oil return can be ensured and the probability of excessive wear caused by insufficient lubricating oil in the compression mechanism 2 can be reduced.

In order to meet differentiated requirements of the oil return capacity of the oil return holes 52 at different positions, flow areas of the at least two oil return holes 52 can be set to be different, for example, the flow area of the first oil return hole 52A is set to be larger than the flow area of the second oil return hole 52B.

In some embodiments, the first oil return hole 52A may be at least one, and when at least two first oil return holes 52A are provided, the at least two first oil return holes 52A are located at the same height.

In some embodiments, the second oil return hole 52B may be at least one, and when at least two second oil return holes 52B are provided, the at least two second oil return holes 52B are located at the same height.

Of course, to further enhance a self-regulating capability of the oil return low, the oil return holes 52 may be configured with a larger height difference. Moreover, at each height level, the number of oil return holes 52 may be one or more. Even in the present application, only a single oil return hole 52 may be provided.

In some embodiments, as illustrated in FIG. 2 and FIG. 3, in a direction of airflow in the gas suction passage 51, an oil return outlet end 522 of the first oil return hole 52A is located downstream of an oil return outlet end 522 of the second oil return hole 52B. It should be understood that in the gas suction passage 51, the closer to the pump suction port 201 of the compression mechanism 2, the stronger the negative pressure, and the greater a suction force for sucking in the gaseous refrigerant and the lubricating oil. Therefore, a path from the oil return outlet end 522 of the first oil return hole 52A to the pump suction port 201 is shorter than a path from the oil return outlet end 522 of the second oil return hole 52B to the pump suction port 201, which enables the oil return capacity of the first oil return hole 52A stronger than that of the second oil return hole 52B, further ensuring the primary oil return capacity of the oil return hole 52.

Of course, the present application is not limited thereto. The oil return outlet ends 522 of the first oil return hole 52A and the second oil return hole 52B may also be arranged such that the path from the oil return outlet end 522 of the first oil return hole 52A to the pump suction port 201 is equal to the path from the oil return outlet end 522 of the second oil return hole 52B to the pump suction port 201.

In some embodiments, as illustrated in FIG. 2 and FIG. 3, the gas suction passage 51 includes a first segment 513 extending in an axial direction of the compression mechanism 2. An end of the first segment 513 is in communication with the pump suction port 201. Axial orientation of the first segment 513 allows the first segment 513 to be axially aligned with the pump suction port 201 of the compression mechanism 2 when connected to the pump suction port 201 of the compression mechanism 2, facilitating easy connection and reducing a risk of gas leakage. Additionally, the pump suction port 201 of the compression mechanism 2 is typically located at an end face of the compression mechanism 2, enabling smoother flow of airflow.

In some embodiments, the gas suction passage 51 further includes a second segment 514. The first segment 513 extends in the axial direction of the compression mechanism 2, and the second segment is vertically arranged. A lower end of the second segment 514 is in communication with the other end of the first segment 513, and an upper end of the second segment 514 forms the gas suction inlet end 511. The second segment 514 is configured such that the first segment 513 can be positioned relative low while the gas suction inlet end 511 is sufficiently high for gas suction. In this way, when the oil return hole 52 is set, the oil return hole 52 can be arranged at a relatively low position, reducing a length of an oil return path, reducing oil return resistance, and reducing a difficulty of arranging the oil return hole 52.

The upper end of the gas suction passage 51 and the upper end of the second segment 514 mentioned in the present application each refers to an end located above in the gravity direction. The upper end of the gas suction passage 51 and the upper end of the second segment 514 mentioned in the present application each refers to an end located below in the gravity direction.

In some embodiments, the oil return hole 52 is arranged to be connected to the second segment 514, which is convenient for processing on the one hand, and on the other hand, the oil return hole 52 is separated from the pump suction port 201 by a certain distance. In this way, the gaseous refrigerant may have a certain time and space during the flow to mix with returned lubricating oil. After sufficient mixing, the lubricating oil is distributed along with the airflow to various positions where the airflow can flow, which is beneficial to uniform distribution of the lubricating oil inside the compression mechanism 2.

In other specific embodiments, the oil return outlet end 522 is located at or close to the lower end of the second segment 514, in such a manner that the lubricating oil can be sucked into the compression mechanism 2 by a larger negative pressure suction force.

In some specific embodiments, the oil return hole 52 is located at a side of the second segment 514 away from the first segment 513 and is in communication with the second segment 514. In this way, a length of the oil return hole 52 does not need to be set too long, the oil return path can be further shortened, the oil return resistance can be reduced, and the oil return capacity can be guaranteed. In addition, the probability of the airflow in the gas suction passage 51 blocking the oil return hole 52 when flowing downward is also reduced, improving fluidity of the oil return.

In some embodiments, as illustrated in FIG. 2 and FIG. 3, the oil return hole 52 extends in the axial direction of the compression mechanism 2 and is adjacent to the lower end of the second segment 514. Therefore, the oil return hole 52 can guide the lubricating oil into the gas suction passage 51 in the axial direction of the compression mechanism 2, which is basically consistent with a flow direction of the airflow after entering the first segment 513. In this way, flow loss is facilitated to be reduced, reducing airflow disturbances in the gas suction passage 51.

Of course, solutions of the present application may not be limited thereto, for example, the oil return hole 52 may be disposed at a bottom of the first segment 513 and in communication with the first segment 513. Alternatively, a plurality of oil return holes 52 may be provided, which may be distributed around the first segment 513.

In the present application, structural configuration of the gas suction-liquid return structure 5 is relatively flexible.

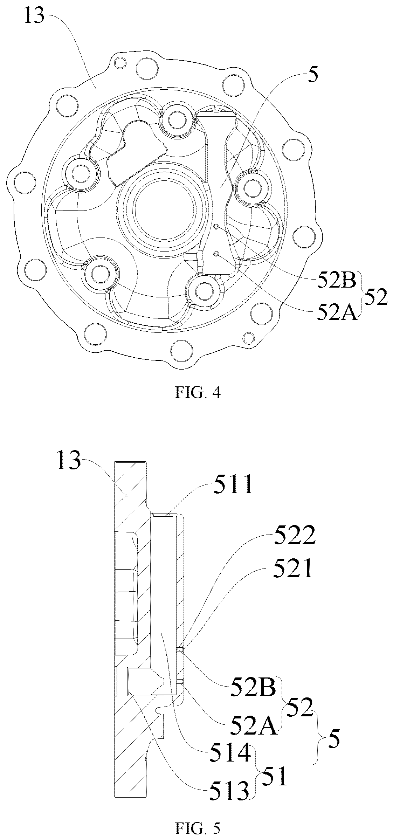

In some embodiments, as illustrated in FIG. 2, FIG. 4, and FIG. 6, the gas suction-liquid return structure 5 is integrally formed at the support 13. That is, the gas suction passage 51 and the oil return hole 52 may be directly formed at the support 13, in such a manner that the number of members can be reduced, and an axial dimension of the electric compressor 100 is facilitated to be controlled. Additionally, after the gas suction passage 51 and the oil return hole 52 are directly formed at the support 13, since a position and an angle of the support 13 are fixed, and the gas suction passage 51 and the oil return hole 52 cannot move relative to the support 13, a gas suction position and an oil return position can be ensured, resulting in high operational reliability.

In other embodiments, as illustrated in FIG. 3, the gas suction-liquid return structure 5 further includes a support suction pipe 53. The gas suction passage 51 is formed at the support suction pipe 53. The support 13 has a mounting hole 131. An end of the support suction pipe 53 is assembled in the mounting hole 131. By providing the support suction pipe 53, a shape of the gas suction passage 51 is less restricted by a shape of the support 13 itself and an assembly relationship. Moreover, the gas suction inlet end 511 of the gas suction passage 51 can be positioned sufficiently high to further reduce the probability of liquid refrigerant inflow. Moreover, the support suction pipe 53 facilitates machining of a desired shape for the gas suction passage 51, eliminates a need for excessive thickness of the support 13, which contributes to a weight control.

In some embodiments, when the gas suction-liquid return structure 5 includes the support suction pipe 53, the oil return hole 52 is formed at a pipe wall of the support suction pipe 53, and may also be directly disposed at the support 13.

In some specific embodiments, as illustrated in FIG. 3, the gas suction-liquid return structure 5 includes the support suction pipe 53. The oil return hole 52 is formed at the pipe wall of the support suction pipe 53 and located at a pipe segment of the support suction pipe 53 that is outside the support 13. Such a configuration enables easier drilling of holes at the pipe. Especially when combined with a shape of the support suction pipe 53, a wide range of a height of the oil return hole 52 can be selected.

In some embodiments, at the support suction pipe 53, the lower end of the second segment 514 forms a curved segment and is connected to the first segment 513. The oil return hole 52 is located at the curved segment at the lower end of the second segment 514. In this way, the airflow mixes more thoroughly with the lubricating oil during a movement and a directional change of the airflow.

In some embodiments, as illustrated in FIG. 2 and FIG. 3, a diameter of the oil return hole 52 ranges from 0.5 mm to 2 mm, in such a manner that an oil return amount of the lubricating oil flowing from the single oil return hole 52 can be controlled within a reasonable range. On the one hand, the diameter of the oil return hole 52 will not be too small to prevent the oil return hole 52 from being blocked by impurities and ensure continuous flow of the lubricating oil supply. On the other hand, the diameter of the oil return hole 52 will not be too large to prevent the lubricating oil in the liquid storage cavity 141 from flowing too fast. Especially when at least two oil return holes 52 are provided, a diameter d1 of the oil return hole 52 not only needs to be controlled within the range of 0.5 mm to 2 mm, but also a height difference of at least 2 mm is existed between the oil return inlet ends 521 of every two oil return holes 52. In this way, when the amount of oil stored in the liquid storage cavity 141 is small, only a small number of oil return holes 52 return the oil, while when the amount of oil stored in the liquid storage cavity 141 is large, a plurality of oil return holes 52 can return the oil. Moreover, due to limitation of the diameter of each oil return hole 52, even if the plurality of oil return holes 52 supply the oil simultaneously, buffer time is still enough for the lubricating oil to flow back to the liquid storage cavity 141 from the compression mechanism 2 or an external system. Therefore, the continuous flow of the lubricating oil supply is ensured from another aspect.

In addition, since a flow rate of the lubricating oil flowing into the single oil return hole 52 is small after being restricted by the diameter, the lubricating oil may be quickly dispersed and evenly mixed by the air flow after flowing into the gas suction passage 51, in such a manner that the oil is quickly dispersed into oil mist, which is beneficial to increase an distribution area of the oil mist when the oil mist enters the compression mechanism 2 and adheres to a surface of a moving member. Therefore, limiting the diameter d1 of the oil return hole 52 to the range of 0.5 mm to 2 mm can effectively reduce the possibility of the lubricating oil being retained and accumulated in the gas suction passage 51.

In some embodiments, as illustrated in FIG. 1, in the gravity direction, a height difference H1 between a lowest oil return inlet end 521 and the bottom wall of the liquid storage cavity 141 ranges from 2 mm to 10 mm. By positioning the oil return inlet end 521 at a height of at least 2 mm above the bottom wall of the liquid storage cavity 141, the probability of blockage of the oil return hole 52 due to settled impurities in the liquid storage cavity 141 can be reduced. By limiting the height difference H1 between the oil return inlet end 521 and the bottom wall of the liquid storage cavity 141 to no more than 10 mm, the probability of the liquid refrigerant entering the oil return hole 52 can be reduced. In this way, a sufficient supply of the lubricating oil within the liquid storage cavity 141 is facilitated to be ensured.

In addition, when the oil return inlet end 521 of the lowest oil return hole 52 is within this height range, a hydraulic pressure of the lubricating oil is higher than a pressure of the refrigerant in the first receiving cavity 14. When the negative pressure is generated at the pump suction port 201 during the suction, a sufficiently large pressure difference is formed between the oil return inlet end 521 and the pump suction port 201, especially when the diameter d1 of the single oil return hole 52 is limited to the range of 0.5 mm to 2 mm, the lubricating oil is facilitated to be injected into the gas suction passage 51 in a jet-like manner at the oil return outlet end 522. The spray-shaped lubricating oil has a large oil mist distribution, and is easier to be fully and evenly mixed with the gaseous refrigerant flowing through.

Further, while satisfying the above-mentioned parameters, as illustrated in FIG. 2, when at least two oil return holes 52 are provided, a distance H2 between the oil return outlet ends 522 of two adjacent oil return holes 52 is at least 2 mm. In this way, when the lubricating oil in each oil return hole 52 is sprayed into the gas suction passage 51 under an action of pressure difference and forms a mist surface, the mist surfaces initially formed by the two oil return holes 52 do not intersect with each other. Therefore, the mist-like lubricating oil is fully mixed and dispersed when the gaseous refrigerant flows through, further reducing the probability of the lubricating oil being retained in the gas suction passage 51.

In some embodiments, as illustrated in FIG. 2 and FIG. 3, a ratio of a diameter d2 of the gas suction passage 51 to the diameter d1 of the oil return hole 52 ranges from 3 to 10. In this way, a mixing ratio of the gaseous refrigerant and the lubricating oil is controlled within a reasonable range. In particular, when the gaseous refrigerant flows through the oil return hole 52, the lubricating oil may be easily carried away, further reducing the probability of the lubricating oil being retained or accumulated in the gas suction passage 51.

In the solutions of the present application, a type of the compression mechanism 2 is not limited, for example, the compression mechanism 2 may be a rotary compression mechanism or a scroll compression mechanism.

As a result, different types of the compression mechanisms 2 may be applied to various electric compressors 100. For example, when the electric compressor 100 is a rotary compressor, the compression mechanism 2 is a rotary compression mechanism and may include a cylinder, a piston, a vane, etc. The drive shaft 4 of the compression mechanism 2 drives the piston to roll inside the cylinder. When the electric compressor 100 is a scroll compressor, the compression mechanism 2 is a scroll compression mechanism and may include a stationary scroll and an orbiting scroll. The drive shaft 4 drives the orbiting scroll to rotate, and so on.

It should be noted that a specific type of the electric compressor 100 is not limited. When the compression mechanism 2 is a rotary compression mechanism, the compression mechanism 2 may be a single-cylinder compression mechanism or a multi-cylinder compression mechanism.

The air conditioning system 200 according to the embodiments of the present application includes the electric compressor 100 according to any one of the above-mentioned embodiments. In this way, by adopting the above-mentioned electric compressor 100, the liquid strike problem of the electric compressor 100 can be reduced, and the use of the liquid receiver can be reduced, which is beneficial to reduce a volume of the air conditioning system 200. In addition, the operating noise and vibration of the electric compressor 100 can be reduced, reducing the overall working noise and vibration of the air conditioning system 200.

It should be noted that, specific application scenarios of the air conditioning system 200 according to the embodiments of the present application are not limited, such as an indoor air conditioner, an indoor refrigerator, a vehicle air conditioner, etc. When the application scenario is determined, those skilled in the art may understand other components of the air conditioning system 200. For example, when used for the indoor air conditioner or the indoor refrigerator, the air conditioning system 200 may further include an evaporator, a condenser, a throttling element, etc. For example, when used for the vehicle air conditioner, the air conditioning system 200 may further include at least one of an in-vehicle condenser, an in-vehicle evaporator, an outdoor condenser, an outdoor evaporator, a throttling component, etc., which will not be repeated here.

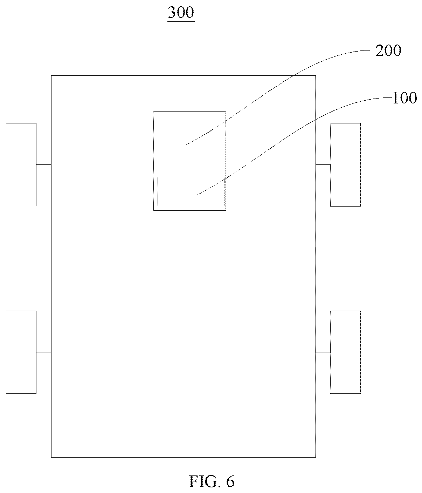

As illustrated in FIG. 6, the vehicle 300 according to the embodiments of the present application includes a vehicle body and the air conditioning system 200 according to any one of above-mentioned embodiments. The air conditioning system 200 is mounted at the vehicle body. Since the liquid strike of the electric compressor 100 included in the air conditioning system 200 according to any one of the above-mentioned embodiments can be improved, when the air conditioning system 200 is applied in the vehicle 300, the operating noise and vibration of the electric compressor 100 can be improved, and a resonance problem of each component in a thermal management system of the vehicle 300 can be improved, improving the noise and the vibration caused to the vehicle 300.

In addition, since the use of the above-mentioned electric compressor 100 can reduce a volume of the air conditioning system 200, a mounting position of the air conditioning system 200 in the vehicle 300 is more flexible.

It should be noted that a specific type of the vehicle 300 according to the embodiments of the present application is not limited, for example, the vehicle 300 may be a new energy vehicle, and the new energy vehicle may include a pure electric vehicle, a hybrid vehicle, etc., which is not described in detail here. In addition, when a type of the vehicle 300 is specifically determined, those skilled in the art may understand other components of the vehicle 300, which is not described in detail here.

The electric compressor 100 according to some specific embodiments of the present application is described below.

### First embodiment

As illustrated in FIG. 1 and FIG. 2, the illustrated electric compressor 100 is a rotary electric compressor, including the housing assembly 1 and the compression mechanism 2. The compression mechanism 2 is configured to compress and convert the low-pressure refrigerant into the high-pressure refrigerant.

The housing assembly 1 includes the first housing 11, the second housing 12, and the support 13. The first housing 11 and the second housing 12 are connected to the two opposite sides of the support 13. The first receiving cavity 14 is defined between the first housing 11 and the support 13. The second receiving cavity 15 is defined between the second housing 12 and the support 13. The compression mechanism 2 is disposed in the second receiving cavity 15 and is fixedly connected to the support 13.

The compression mechanism 2 is a double-cylinder compression mechanism including a first bearing, a second bearing, a first cylinder, a second cylinder, a first piston, a second piston, and a partition plate. The first cylinder and the second cylinder are spaced apart from each other in an axial direction. The first cylinder is located at a side of the second cylinder close to the support. The partition plate is sandwiched between the first cylinder and the second cylinder. The first bearing is disposed at a side of the first cylinder away from the partition plate. The second bearing is disposed at a side of the second cylinder away from the partition plate.

A first compression cavity is among between the first cylinder, the partition plate and the first bearing. The first piston is rollably disposed in the first compression space. A second compression cavity is defined among the second cylinder, the partition plate and the second bearing. The second piston is rollably disposed in the second compression space. The compression mechanism 2 has the pump suction port 201 in communication with at least one of the first compression cavity and the second compression cavity.

The support 13 is provided with the gas suction-liquid return structure 5. The gas suction-liquid return structure 5 is integrally formed at the support 13, that is, the support 13 has the gas suction passage 51 and the oil return hole 52. The gas suction passage 51 is in an L-shape. An end of the gas suction passage 51 is in communication with the pump suction port 201. The oil return hole 52 is in communication with the gas suction passage 51.

The bottom of the first receiving cavity 14 forms a liquid storage cavity 141. The upper end of the gas suction passage 51 is the gas suction inlet end 511. The upper end of the gas suction passage 51 is in communication with the first receiving cavity 14 and is located above the liquid storage cavity 141. At least two oil return holes 52 are provided and includes the first oil return hole 52A and the second oil return hole 52B, which are in different heights and are both in communication with the liquid storage cavity 141.

### Second embodiment

As illustrated in FIG. 3, the second embodiment is basically the same as the first embodiment, except that the gas suction-liquid return structure 5 further includes the support suction pipe 53. The gas suction passage 51 is formed at the support suction pipe 53. The support 13 has a mounting hole 131. An end of the support suction pipe 53 is assembled in the mounting hole 131.

In the description of the present application, reference throughout this specification to "embodiment", "example", etc. means that a particular feature, structure, material, or characteristic described in connection with the embodiment or example is included in at least one embodiment or example of the present application. The appearances of the above phrases in various places throughout this specification are not necessarily referring to the same embodiment or example. Further, the particular features, structures, materials, or characteristics may be combined in any suitable manner in one or more embodiments or examples.

Although embodiments of the present application have been illustrated and described, it is conceivable for those skilled in the art that various changes, modifications, replacements, and variations can be made to these embodiments without departing from the principles and spirit of the present application. The scope of the present application shall be defined by the claims as appended and their equivalents.

## Claims

1. An electric compressor, comprising:
a housing assembly comprising a first housing and a support, wherein a first receiving cavity is defined between the first housing and the support, the first housing having a refrigerant inlet in communication with the first receiving cavity, and a bottom of the first receiving cavity forming a liquid storage cavity; and
a compression mechanism connected to the support and having a pump suction port,
wherein:
the support is provided with a gas suction-liquid return structure comprising a gas suction passage and an oil return hole;
one end of the gas suction passage is a gas suction inlet end in communication with the first receiving cavity and located above the liquid storage cavity in a gravity direction, and the other end of the gas suction passage is in communication with the pump suction port; and
two ends of the oil return hole are an oil return inlet end in communication with the liquid storage cavity and an oil return outlet end in communication with the gas suction passage.

2. The electric compressor according to claim 1, wherein at least two oil return holes are provided and comprise a first oil return hole and a second oil return hole, and an oil return inlet end of the first oil return hole is located below an oil return inlet end of the second oil return hole in the gravity direction.

3. The electric compressor according to claim 2, wherein, in a direction of airflow in the gas suction passage, an oil return outlet end of the first oil return hole is located downstream of an oil return outlet end of the second oil return hole.

4. The electric compressor according to any one of claims 1 to 3, wherein the gas suction passage comprises:
a first segment extending in an axial direction of the compression mechanism, wherein one end of the first segment is in communication with the pump suction port; and
a second segment vertically arranged and having a lower end in communication with the other end of the first segment and an upper end forming the gas suction inlet end.

5. The electric compressor according to claim 4, wherein the oil return hole is located at a side of the second segment away from the first segment and is in communication with the second segment.

6. The electric compressor according to claim 4 or 5, wherein the oil return hole extends in the axial direction of the compression mechanism and is adjacent to the lower end of the second segment.

7. The electric compressor according to any one of claims 1 to 6, wherein:
the gas suction-liquid return structure is integrally formed at the support; or
the gas suction-liquid return structure further comprises a support suction pipe, the gas suction passage is formed at the support suction pipe, and the support has a mounting hole, an end of the support suction pipe being assembled in the mounting hole.

8. The electric compressor according to claim 7, wherein:
the gas suction-liquid return structure comprises the support suction pipe; and
the oil return hole is formed at a pipe wall of the support suction pipe and located at a pipe segment of the support suction pipe that is outside the support.

9. The electric compressor according to any one of claims 1 to 8, wherein:
a diameter of the oil return hole ranges from 0.5 mm to 2 mm; and
a height difference between the oil return inlet end and a bottom wall of the liquid storage cavity ranges from 2 mm to 10 mm.

10. The electric compressor according to any one of claims 1 to 9, wherein a ratio of a diameter of the gas suction passage to a diameter of the oil return hole ranges from 3 to 10.

11. The electric compressor according to any one of claims 1 to 10, wherein the compression mechanism is a rotary compression mechanism or a scroll compression mechanism.

12. An air conditioning system, comprising the electric compressor according to any one of claims 1 to 11.

13. A vehicle, comprising:
a vehicle body; and
the air conditioning system according to claim 12, wherein the air conditioning system is mounted at the vehicle body.
